# EUROPEAN PATENT APPLICATION

(11) **EP 2 933 200 A1**
(43) Date of publication of application: **21.10.2015**
(21) Application number: 15163040.7
(22) Date of filing: 09.04.2015
(51) Int. Cl.: B65C 7/00

(54) **ROBOTIZED ISLAND AND RELATIVE METHOD FOR THE AUTOMATIC LABELLING OF BEAMS OF ROUND STEEL, OF BILLETS EXITING CONTINUOUS CASTING AND OF WIRE RODS EXITING THE EVACUATION LINE**

(30) Priority: 09.04.2014 IT MI20140668
(71) Applicant: BM Group Holding S.p.A., 38082 Cunego (TN) (IT)
(72) Inventor: Bottini, Mirko, 38083 CONDINO (TN) (IT)
(74) Representative: Martini, Gabriele

(57) **Abstract**

Robotized island (10) for the automatic labelling (15) of metal products such as beams of round steel (11), billets (12) exiting continuous casting or wire rods (13) exiting the evacuation line; said island comprising:
- a label-creating station;
- a label application robot (14);
- supply and control boards;
characterised in that said label application robot (14) is provided with a video camera to detect an image of the application area of said label (14); said image being transmitted to a processor to identify a constraint position of said label; said label application robot (14) being provided with welding means of said label in said constraint position.

## Description

The present invention refers to a robotized island for automatic labelling.

In particular, the present invention refers to a robotized island for the automatic labelling of beams of round steel, of billets exiting continuous casting and of wire rods exiting the evacuation line.

In this technical field, there are substantially two procedures used today.

The first one is to provide pressure marking of a code on products. Such marking, although effective because automated, has the disadvantage that it is sometimes located in a position not visible to the user, for example superimposed on another product, making the same marking vain.

Another procedure used today is to manually provide for the positioning of the labels on the finished products. Although it solves the problem of the visibility of the label, such manual labelling is very disadvantageous because it is not carried out in an automatic and robotized manner.

Starting from this known technique, the object of the present invention is to make a robotized island for automatic labelling which is alternative to those known and particularly efficient.

In particular, the object of the present invention is to make a robotized island that allows to place the labels on the products in a secure and automatic manner, and in a visible position for the user.

In general, these objects are achieved by equipping the island with an anthropomorphic robot provided with a video camera capable of detecting the labelling area, with an image processing system capable of choosing the best fixing position, a printer for the on-site label forming and welding means to weld the label to the products.

Preferably, the welding means are also housed in the robot which, after welding, also carries out test cycles on the weld made.

In the detail of the case of the automatic labelling of billets exiting continuous casting, the robotized island comprises:
- an anthropomorphic robot with 6 axes with a welding assembly;
- a label preparation station;
- a dedicated area for the safe storing and loading of consumables.

This island allows to put the robot in a rest position such as not to disturb the maintenance operations of the evacuation line of continuous casting.

The robot is protected in a waiting position by means of suitable fixed metal shields towards the continuous casting. In addition to the shields, the arms of the robot are protected with a suit in fireproof, reflective textile material.

The metal film labels, as well as the printer and the control system, are located inside two insulated containers which are located at the outer margins of the support structure. Inside these containers it is also possible to provide the housing of the control boards of the robots, releasing the entire environment from wirings, ducts and the search for equipment locations.

The robots pick up the label printed previously and come ahead of the stopped billet in the labelling position and centred on the line.

The label is placed on the billet, fixed and welded in the intended point through a metal ball; the entire label application head is mounted on an anti-kickback system to protect from impact and to allow the safe juxtaposition to the billet.

The robot is also equipped with a 3d laser video camera capable of detecting the front image of the billet to assess its lozenges.

In this case, the label may be placed inclined so as to allow the detection by the operator even at a distance on the storage stack.

### System composition

In the case of a robotized island for the automatic labelling of beams of round steel, the latter may comprise:
- a label-creating station;
- a label application robot;
- supply and control boards.

In such an island, the typical sequence of a labelling cycle can be summarized as follows:
- transmission from the customer's automation system to the control unit of the data to be marked on the card coming to the printer and possible control of congruence;
- cutting of the card and extraction preparation by the robot;
- upon receipt of the start signal, start of the labelling cycle, setting of the signal "cycle not in progress"= 0 to prohibit the movement of the beams;
- reading of the optical system;
- calculation of the position of the round to be welded;
- upon the signal "round ok", extraction of the label and movement to the welding position;
- support welding and subsequent tensile and bending tightness test of the wire with three efforts in case the tightness test is not successful.

In the case of the robotized island for the automatic labelling of wire rods exiting the evacuation line, the system comprises:
- label-creating station;
- label application robot;
- supply and control boards.

The operation principle of such an island can be summarized as follows.

Once the system has received the print command from the system tracking, it creates the garter and label assembly in the label creation station, the robot picks up the card, the robot head is positioned in the scanning position above the wire rod, it analyses and determines the best coupling point, and, finally, it fixes the label to the wire rod garter.

Further characteristics of the invention are highlighted by the appended claims.

The characteristics and advantages of a robotized island for automatic labelling according to the present invention will become more obvious from the following exemplifying and non-limiting description, referring to the attached schematic drawings in which:
- figures 1 and 2 show examples of a robotized island for the automatic labelling of billets;
- figure 3 shows a labelled billet;
- figures 4 and 5 show a robotized island for the automatic labelling of a beam of round steel;
- figures 6, 7 and 8 respectively show a beam of round steel before the labelling, the innovative label and the beam of round steel after the labelling;
- figure 9 shows the choice of the constraint position of the label in the beam of steel of figure 8;
- figure 10 shows an example of a robotized island for the automatic labelling of wire rods;
- figures 11 and 12 show the choice of the constraint position of the label in the wire rods; and
- figure 13 shows a wire rod after the labelling.

In reference to the figures, examples of robotized islands for automatic labelling according to the present invention are shown with 10.

Such a robotized island 10 comprises:
- a label-creating station;
- a label application robot 14;
- supply and control boards.

In particular, the label application robot 14 is provided with a video camera to detect an image of the application area of the label 14 and label welding means in the constraint position.

The choice of the constraint position takes place by transmitting the image to a processor for the detection of a better constraint position.

The label-creating station comprises a printer for making the card and means for bending a metal wire as constraint element for said card to said products. Finally, the robot also comprises gripping means capable of testing the weld made.

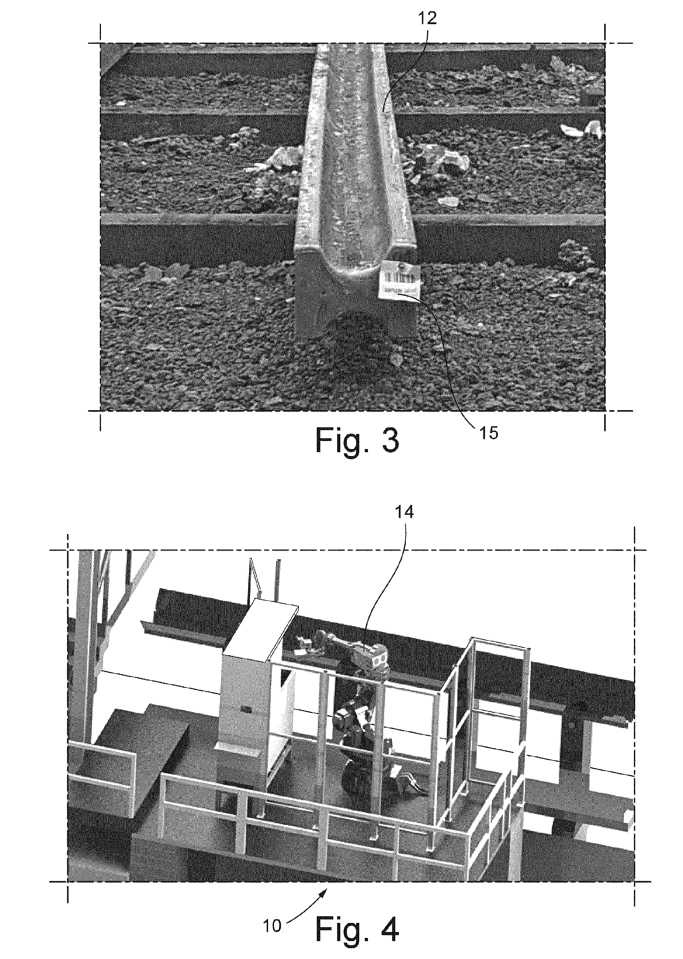

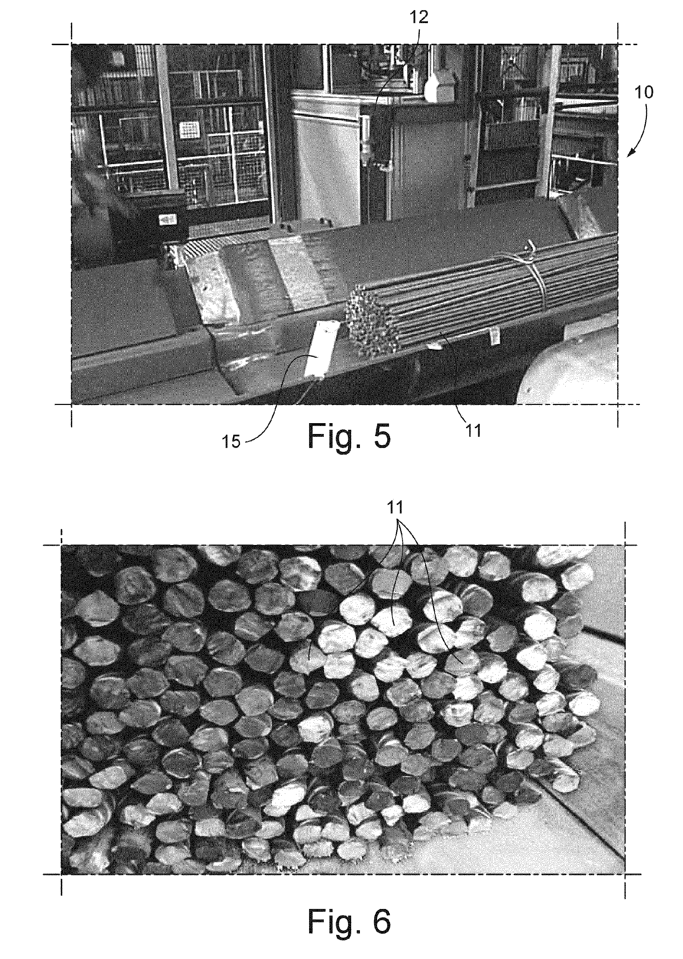

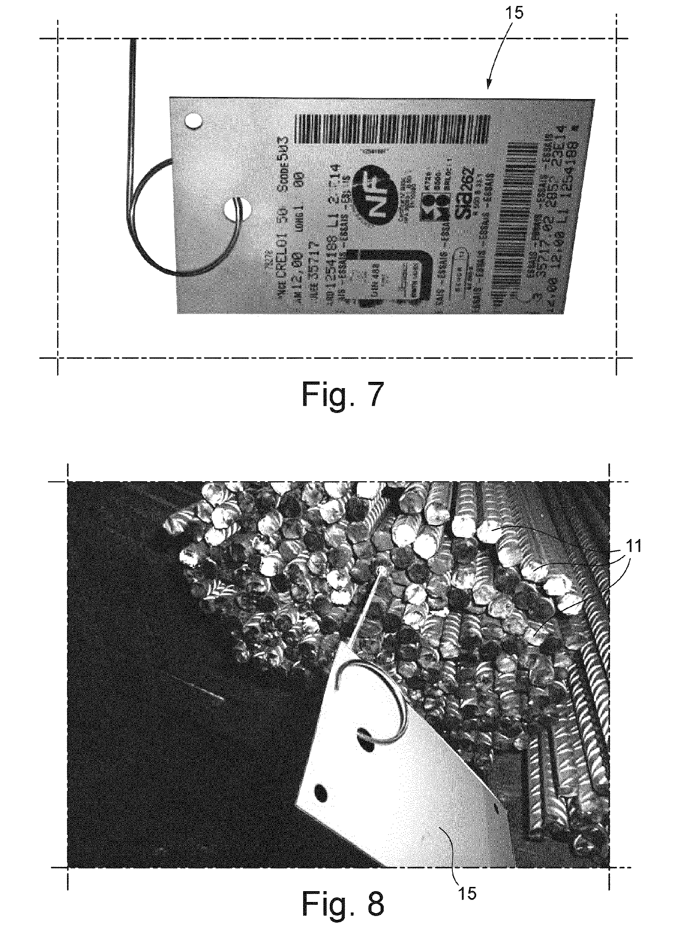

In the case of beams of round steel 11, figures 4-9, the step of identifying a constraint position of the label comprises the step of identifying the centre of the end section of the beam of round steel and, starting from the centre, identifying the element projecting beyond a threshold value from the surrounding elements.

In this way, the welding end of the label will not be hinded by projecting elements in the proximity.

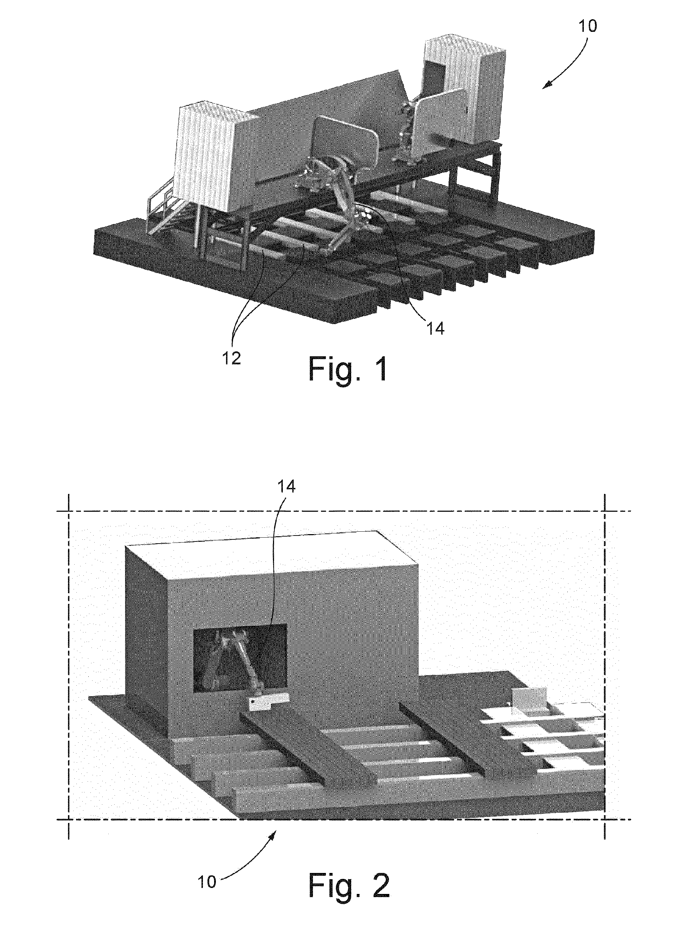

For the billets 12, figures 1-3, exiting continuous casting, the step of identifying a constraint position of the label comprises the step of locally identifying the inclinations of the end face of the billet to choose a position of maximum visibility even at a distance.

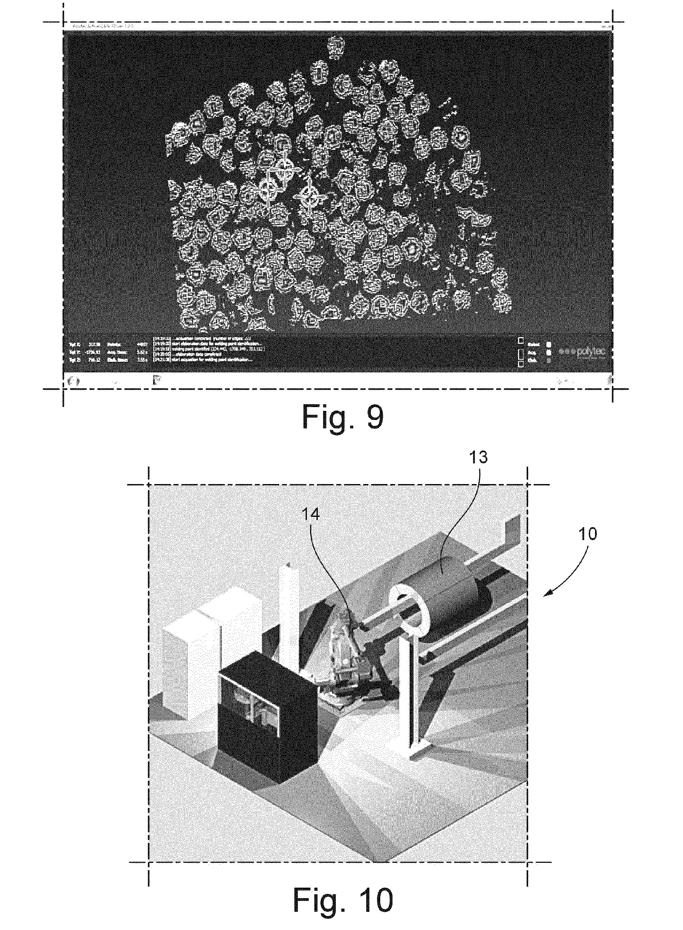

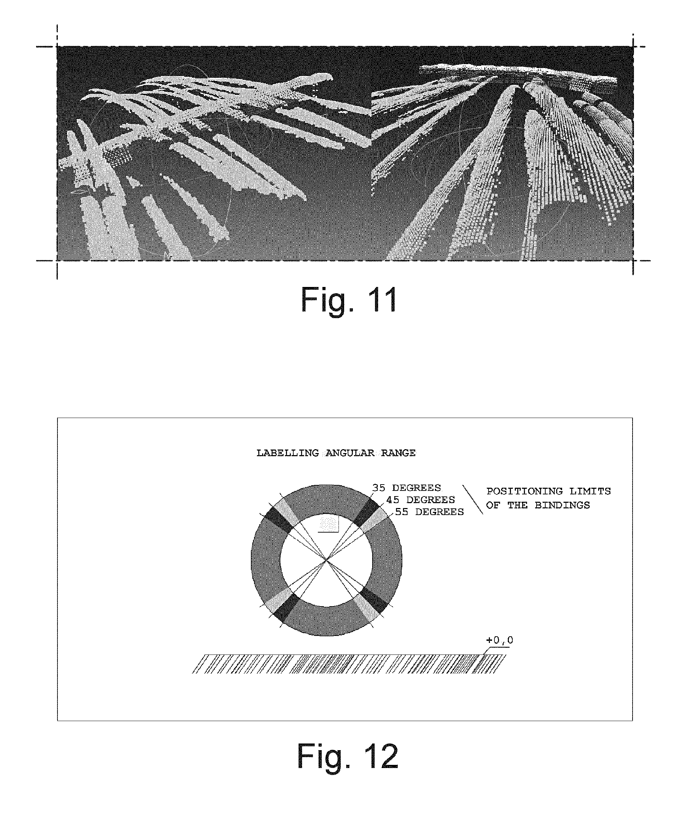

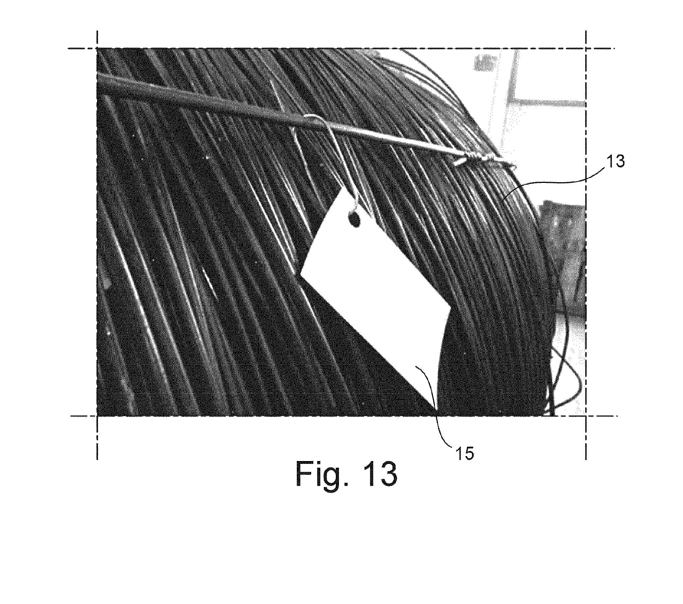

For the wire rods 13 exiting the evacuation line, figures 10-13, the step of identifying a constraint position of the label comprises the step of detecting an angular sector of the wire rod 13 and identifying the element distant from the binding beyond a threshold value.

It has thus been seen that a robotized island for automatic labelling according to the present invention achieves the previously highlighted objects.

In fact, in the case of the automatic labelling of the billets exiting continuous casting, it is guaranteed:
- lower industrial costs for consumables and maintenance;
- greater safety and operational precision;
- greater precision in product traceability;
- reduction of cycle times;
- control and optimization of process times.

In the case of the automatic labelling of beams of round steel, the following advantages are achieved:
- avoiding continuous operator access to hazardous areas;
- a safe application by welding of the support with tightness test;
- card integrity safety by double folding of the support;
- continuous monitoring of control systems and stores;
- work cycles with repetitive times and modes, which are therefore safer;
- maintenance of the card away from the hot beam to prevent deteriorations;
- ease for end customers to search for material in the pile.

In the case of the automatic labelling of wire rods exiting the evacuation line, the following advantages are achieved:
- avoiding continuous operator access to hazardous areas;
- obtaining a safe labelling by an anti-slipping ring and mechanical tightness test;
- card integrity safety by double folding of the support;
- continuous monitoring of control systems and stores;
- work cycles with repetitive times and modes, which are therefore safer;
- defining the range within which the label is to be placed;
- ease for end customers to search for material in the pile.

The robotized island for automatic labelling of the present invention thus conceived is subject to numerous modifications and variations, all of which fall under the same inventive concept; furthermore, all details may be replaced by technically equivalent elements. In practice, the materials used, as well as their dimensions, may be of any type depending on technical needs.

## Claims

1. Robotized island (10) for the automatic labelling (15) of metal products such as beams of round steel (11), billets (12) exiting continuous casting or wire rods (13) exiting the evacuation line; said island comprising:
- a label-creating station;
- a label application robot (14);
- supply and control boards;
**characterised in that** said label application robot (14) is provided with a video camera to detect an image of the application area of said label (14); said image being transmitted to a processor to identify a constraint position of said label; said label application robot (14) being provided with welding means of said label in said constraint position.

2. Robotized island (10) according to claim 1 **characterised in that** said label-creating station comprises a printer for making the card and means for bending a metal wire as constraint element for said card to said products.

3. Robotized island (10) according to claim 1 **characterised in that** said label application robot (14) comprises gripping means capable of testing the weld made.

4. Method for the automatic labelling (15) of metal products such as beams of round steel (11), billets (12) exiting continuous casting or wire rods (13) exiting the evacuation line by means of a robotized island (10) according to any previous claim; said method comprising the steps of:
- creating a label (15);
- constraining said label on said products through welding;
**characterised in that** said step of constraining said label comprises the steps of:
- through a video camera, detecting an image of the application area of said label (15);
- transmitting the image to a processor;
- identifying a constraint position of said label inside said application area;
- welding said label in said constraint position.

5. Method according to claim 4 **characterised in that** said step of constraining said label is carried out by a robot.

6. Method according to claim 5 **characterised in that** it also comprises the step of checking the weld made through said robot (14).

7. Method according to claim 4 when applied to the labelling of beams of round steel (11) **characterised in that** said step of identifying a constraint position of said label comprises the step of identifying the centre of the end section of said beam of round steel and, starting from the centre, identifying the element projecting beyond a threshold value from the surrounding elements.

8. Method according to claim 4 when applied to the labelling of billets (12) exiting continuous casting **characterised in that** said step of identifying a constraint position of said label comprises the step of locally identifying the inclinations of the end face of the billet.

9. Method according to claim 4 when applied to the labelling of wire rods (13) exiting the evacuation line **characterised in that** said step of identifying a constraint position of said label comprises the step of detecting in an angular sector of said wire rod (13) and identifying the element distant from the binding beyond a threshold value.

10. Method according to claim 4 **characterised in that** said step of creating the label comprises the step of printing a plate and associating a bent metal wire with said label.
